# EUROPÄISCHE PATENTANMELDUNG

(11) **EP 1 337 023 A2**
(43) Veröffentlichungstag der Anmeldung: **20.08.2003**
(21) Anmeldenummer: 03003330.2
(22) Anmeldetag: 13.02.2003
(51) Int. Cl.: H02H 3/12, H01H 13/64

(54) **Steuerungsordnung für mit elektrischer Spannung betriebene, mit Netzfreischaltung versehene netzabhängig gespeiste Geräte**

(30) Priorität: 13.02.2002 DE 10205951
(71) Anmelder: Cimosys AG, 8638 Goldingen (CH)
(72) Erfinder: Farmont, Rolf, Dr., 40474 Düsseldorf (DE)
(74) Vertreter: GROSSE BOCKHORNI SCHUMACHER

(57) **Zusammenfassung**

Eine Steuerungsanordnung für mit elektrischer Spannung, insbesondere Niederspannung, betriebene, mehrere Funktions-Stelleneinrichtungen aufweisende Geräte (1), die über einen mit der Netzfreischaltungseinrichtung versehenen netzabhängigen Transformator (2) gespeist werden, bestehend aus
a) einer in einer Schaltfläche (12) zur Handbedienung zusammengefaßten Schalteinheit (3) zur Steuerung der Funktions-Stelleneinrichtungen sowie der Netzfreischaltungseinrichtung des zu steuernden Gerätes (1),
b) mehreren über die Schaltfläche (12) von eine Bedienperson mechanisch, insbesondere als Taster, betätigbaren elektrischen Schaltkontakten und
c) Übertragungsmitteln zum Übertragen der Steuerungsbefehle auf die Netzfreischaltungseinrichtung und auf die Funktions-Stelleinrichtungen.

Die Schalteinheit (3) wird dadurch vereinfacht, daß in der Schaltereinheit (3) für die Netzfreischaltungseinrichtung einerseits und für die Funktions-Stelleinrichtung andererseits jeweils getrennte Schaltkontakte (4, 4') und (5, 5') und getrennte Übertragungsmittel (4A) und (5A) bei permanenter Trennung der Steuerstromkreise der Netzfreischaltungseinrichtung und Funktions-Stelleinrichtung voneinander vorgesehen sind. Dadurch wird auch das Problem konkurrierender Spannungsversorgungen der Schaltereinheit ausgeräumt.

## Beschreibung

Die Erfindung betrifft eine Steuerungsanordnung für mit elektrischer Spannung, insbesondere Niederspannung, betriebene, mehrere Funktions-Stelleinrichtungen aufweisende Geräte, die über einen mit einer Netzfreischaltungseinrichtung versehenen netzabhängigen Transformator gespeist werden, mit den Merkmalen des Oberbegriffs des Anspruchs 1. Derartige Steuerungsanordnungen weisen demnach eine Schaltereinheit zur Steuerung der Funktions-Stelleinrichtungen des zu steuernden Gerätes und der Netzfreischaltungseinrichtung auf. Diese Schaltereinheit ist in einer Schaltfläche zur Handbedienung zusammengefaßt, so daß sämtliche Funktionen mittels dieser Schaltfläche betrieben werden können. Hierzu dienen über die Schaltfläche von einer Bedienperson mechanisch betätigbare elektrische Schaltkontakte, insbesondere in Form von Tastern. Ferner sind Übertragungsmittel vorgesehen, welche die Steuerungsbefehle von der Schaltereinheit auf die Netzfreischaltungseinrichtung und auf die Funktions-Stelleinrichtungen übertragen.

Eine derartige Steuerungsanordnung ist aus der EP 0 615 667 B2 bekannt und wird dort anhand einer mehrmotorigen Verstelleinrichtung für ein Bettgestell beispielhaft beschrieben. Die dort vorgeschlagene Lösung gestattet es, allein mit Hilfe des für die jeweilige Stellfunktion benötigten elektrischen Schalttasters sowohl die Netzspannung für den Netztransformator freizuschalten, als auch den Stellbefehl für das Gerät (Verstelleinrichtung eines Bettgestells) zu geben. Nur so lange der Taster niedergedrückt ist wird die Stellfunktion ausgeführt und ist die Netzspannung für den Netztransformator freigeschaltet. Der Netztransformator ist daher nur während der sehr kurzen Zeitphasen eingeschaltet, in denen er wirklich benötigt wird. Die bekannten Nachteile der nichtnetzfreigeschalteten Transformatoren, wie permanenter Stromverbrauch, Transformatorbrummen und Aussenden eines elektromagnetischen Feldes, werden zuverlässig vermieden. Allerdings ist es bei dieser bekannten Steuerungsanordnung notwendig, eine Hilfsspannungsquelle in die durch den einzigen Taster gekoppelten Steuerstromkreise der Netzfreischaltungseinrichtung und der Funktions-Stelleinrichtungen einzufügen. Dies geschieht notwendigerweise im Wege einer Parallelschaltung des Niedervoltausgangs des Netztransformators mit der Hilfsspannungsquelle. Nur so ist es möglich, an der durch die Netzfreischaltung zunächst potentialfreien Schaltereinheit durch Betätigen eines der Schaltkontakte die von der Schaltereinheit separate Netzfreischaltungseinrichtung in der Netzzuleitung des Netztransformators zu aktivieren. Wenn diese Aktivierung erfolgt ist versorgt nunmehr der Netztransformator die Schaltereinheit mit Betriebsspannung, solange eine Schaltkontakt der Schaltereinheit von der Bedienperson betätigt wird. Während dieser Dauer konkurriert die Hilfsspannungsquelle mit der Betriebsspannungsquelle (Netztransformator).

Davon ausgehend ist es die Aufgabe der Erfindung, die Schaltereinheit zu vereinfachen. Insbesondere ist es erwünscht, die Probleme der konkurrierenden Spannungsversorgungen der Schaltereinheit auszuräumen.

Zur Lösung dieser Aufgabe wird eine Steuerungsanordnung mit den Merkmalen des Anspruchs 1 vorgeschlagen. Demnach basiert die Erfindung auf dem Grundgedanken, bei Verbleib der Schaltfunktionen sowohl für die Funktions-Stelleinrichtungen als auch für die Netzfreischaltungseinrichtung des zu steuernden Gerätes in einer einzigen Schaltfläche zur Handbedienung, voneinander elektrisch getrennte Schaltkontakte und getrennte Übertragungsmittel für die Steuerungsbefehle für die Netzfreischaltungseinrichtung einerseits und für die Funktions-Stelleinrichtungen andererseits vorzusehen. Durch eine permanente Trennung der Steuerstromkreise der Netzfreischaltungseinrichtung und der Funktions-Stelleinrichtungen voneinander können die jeweiligen Steuerstromkreise mit unterschiedlichen und für den Bedarf optimierten elektrischen Betriebsspannungen betrieben werden, ohne daß der Komfort einer ausschließlich für den Stellbetrieb erfolgenden Freischaltung des Netztrafos aufgegeben wird.

In besonders einfacher Weise läßt sich die erfindungsgemäße Steuerungsanordnung für einen doppelhändigen Betrieb der Handbedienung realisieren. Diese Betriebsweise ist besonders betriebssicher und störungsunanfällig, weil ein z. B. unbeabsichtigtes Dauerbetätigen eines Schaltkontaktes nicht sogleich zum Aktivieren der gewünschten Funktion führt (z. B. wenn die Bedienperson mit der als Fernbedienung nutzbaren Handbedienung in der Hand einschläft oder im Schlaf oder sonst wie berührt).

Natürlich ist es zur Komfortsteigerung auch möglich die Handbedienung über eine kabellose Befehlsstrecke, z. B. durch Infrarot-Fernbedienung, mit dem zu steuernden Gerät befehlsmäßig zu koppeln, anstatt eine Kabelverbindung vorzusehen. Insbesondere kann die Handbedienung, z. B. ein kabelloses Haustelefon, einer Basisstation zur kabellosen Fernbedienung des zu steuernden Gerätes entnommen werden. In diesem Fall kann auch vorgesehen werden, den Schaltkontakt für die Netzfreischaltung an der Basisstation derart vorzusehen, daß bei Entnahme der Handbedienung aus der Basisstation das Netz automatisch freigeschaltet und beim Zurückstellen der Handbedienung auf die Basisstation automatisch wieder ausgeschaltet wird. Eine derartige Steuerungsanordnung ist auch für sich genommen von eigenständig erfinderischer Bedeutung.

Sofern eine Einhand- oder Einfingerbedienung der Schaltereinheit gewünscht ist, wird jedem Schaltkontakt für eine Funktions-Stelleinrichtung ein weiterer Schaltkontakt für die Netzfreischaltungseinrichtung räumlich derart zugeordnet, daß beide Schaltkontakte mit einem einzigen Fingerdruck gleichzeitig betätigt werden. Für diesen Anwendungsfall wird es besonders bevorzugt, bei einer einzigen Schalterbetätigung die Schaltkontakte für die Netzfreischaltungseinrichtung und die Funktions-Stelleinrichtung zeitlich nacheinander zu kontaktieren.

Während es eine erfindungsgemäße Steuerungsanordnung grundsätzlich erlaubt, für die jeweils zu schaltende Betriebsspannung direkt schaltbare Schaltkontakte zu verwenden, können gewünschtenfalls auch indirekte Schaltungen bei Zuhilfenahme von Schaltrelais für den einen oder den anderen oder beide Steuerstromkreise verwendet werden. Diese Schaltrelais können dann wie üblich an dem zu steuernden Gerät selbst bzw. an der Netzfreischaltungseinrichtung vorgesehen werden, so daß die Baugröße der Handbedienung klein gehalten werden kann.

Als besonders vorteilhaft - da einfach im Aufbau und preiswert herstellbar - hat sich ein Doppelschaltkontakt mit Schaltwegübertrager erwiesen. Der Schaltwegübertrager bewirkt, daß voneinander elektrisch völlig getrennte und zu verschiedenen Steuerstromkreisen gehörende Schaltkontakte mit einem einzigen Fingerdruck, z. B. eines Tasters, geschlossen werden können. Dies ist sowohl bei gleichzeitiger als auch bei zeitlich versetzter Kontaktierung möglich. Ein derartiger Doppelschaltkontakt ist auch für sich genommen von eigenständig erfinderischer Bedeutung.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - ein bevorzugtes Ausführungsbeispiel der erfindungsgemäßen Steuerungsanordnung für mit elektrischer Niederspannung betriebene, mit Netzfreischaltung versehene netzabhängig gespeiste Geräte dargestellt ist. In der Zeichnung zeigen:
- Fig. 1: eine in einer Schaltfläche zur Handbedienung zusammengefaßte Schaltereinheit mit Verbindungskabel als Übertragungsmittel;
- Fig. 2A - 2C: Schaltpläne für drei Varianten einer Steuerungsanordnung sowie
- Fig. 3: einen Doppelschaltkontakt in Prinzipdarstellung

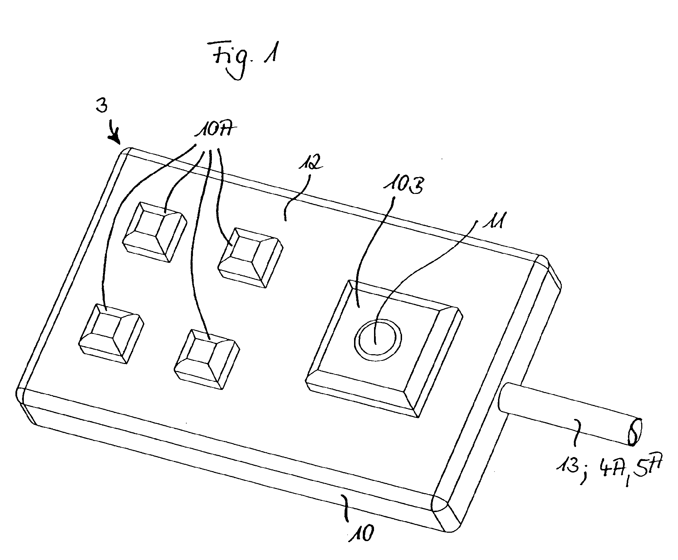

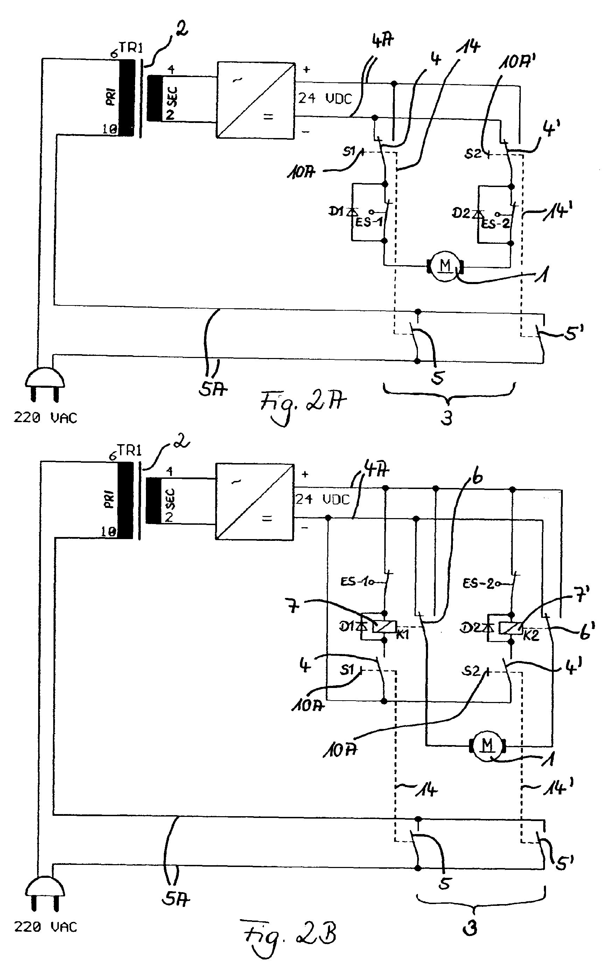

Bei dem Ausführungsbeispiel nach Figur 1 weist eine mit Gehäuse 10 versehene Handbedienung für ein mit zwei Motoren verstellbares Bettgestell eine Schaltfläche 12 mit einer Mehrzahl von Tastern 10A, 10B einer Schaltereinheit auf. Während die Taster 10A zur getrennten Fernbedienung der beiden Verstellmotoren in die eine oder andere Verstellrichtung dienen, dient der mit einer Kontrollleuchte 11 ausgestattete Taster 10B der Betätigung der Netzfreischaltung. Diese Ausführungsform ist für doppelhändigen Betrieb der Handbedienung geeignet.

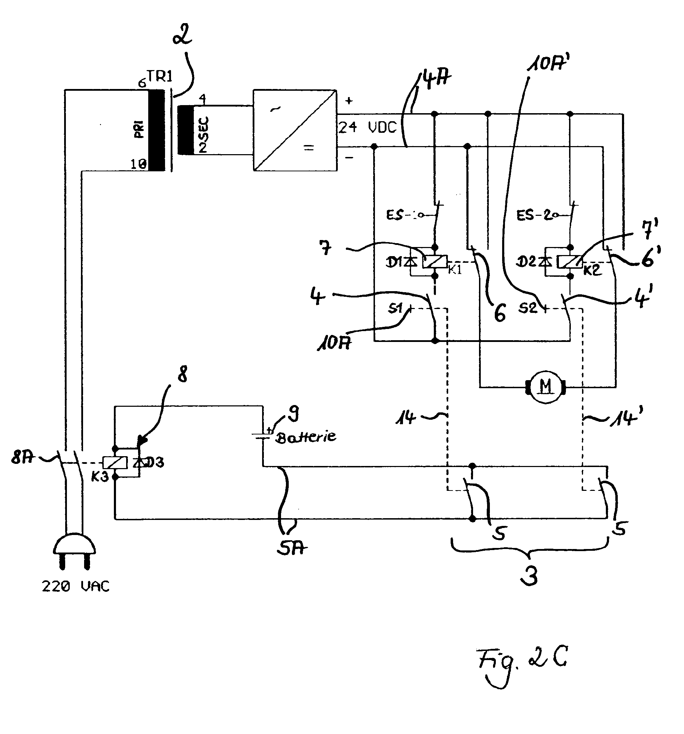

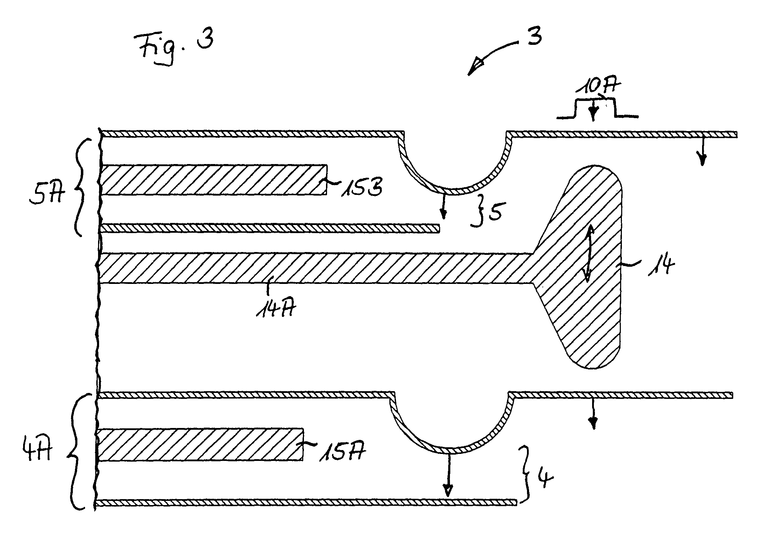

Die Schaltpläne nach Figuren 2A bis 2C betreffen ein von Fig. 1 abweichendes Ausführungsbeispiel. Sie weisen untereinander denselben Grundaufbau auf: Ein zu steuerndes Gerät 1 in Gestalt eines Verstellmotors für Niederspannungsbetrieb (z. B. 12 oder 24 Volt) wird über einen Netztransformator 2 von einem üblichen Haushaltsstromnetz (220 V/AC) gespeist. Auf der Niederspannungsseite des Netztransformators 2 ist das Gerät 1 über Schaltkontakte 4, 4' in Gestalt von ansich bekannten Tasterschaltern auf den Niederspannungsausgang des Netztransformators schaltbar, wobei der Schaltkontakt 4 für den einen und der Schaltkontakt 4' für den entgegengesetzten Betriebsinn des Gerätes zuständig sind. Auf der Netzspannungsseite des Netztransformators 2 führen getrennte elektrische Leitungen 5A zu zwei Schaltkontakten 5, 5', die im Ruhezustand permanent offen stehen und durch Tasterdruck beide gemeinsam oder wahlweise geschlossen werden können um die Netzspannung für den Netztrafo 2 im Bedarfsfall freizuschalten. In dem dargestellten Ausführungsbeispiel ist, wie besonders bevorzugt, eine gemeinsame Bedienung der Schaltkontakte 4 mit 5 bzw. 4' mit 5' vorgesehen mittels Taster 10A bzw. 10A'. Dies ist durch einen gestrichelt dargestellten Schaltwegübertrager 14 bzw. 14' dargestellt. Einzelheiten eines derartigen Doppelschaltkontaktes sind beispielhaft in Figur 3 dargestellt und werden weiter unten noch näher erläutert.

Während bei dem Ausführungsbeispiel nach Figur 2A auf Schaltrelais völlig verzichtet wurde, sind diese im Ausführungsbeispiel nach Figur 2B für die Niederspannungsseite mit 7, 7' dargestellt. Diese betätigen Schalter 6, 6' für das Durchschalten des Gerätes 1 (Motor) an der Niederspannungsseite des Netztrafos 2 für ein oder anderen Verstellsinn. Die als Leistungsschalter dienenden Schalter 6, 6' können in diesem Fall von der Schaltereinheit 3 getrennt an oder nahe dem Geräte 1 oder dem Netztransformator 2 untergebracht sein. Die Schaltereinheit 3 umfaßt somit lediglich die Schaltkontakte 4, 4' und 5, 5' mit zwei Tastern 10A und zwei Schaltwegübertragern 14, 14'.

Bei dem Ausführungsbeispiel nach Figur 2C ist der Niederspannungsteil des Netztransformators 2 schaltungsmäßig wie in Figur 2B aufgebaut. Demgegenüber ist der die Netzfreischaltung betreffende Teil als Relaisschaltung aufgebaut, bei der ein zweipoliger Relaisschalter 8A in der Netzzuleitung des Netztransformators 2 von einem Relais 8, das den Relaisschalter 8A spannungsfrei offen hält, betätigt wird. Das Relais 8 liegt im Steuerstromkreis für die Netzfreischaltung mit den Schaltkontakten 5, 5', wie sie auch bei den Ausführungsbeispielen nach Figur 2A und 2B verwendet werden. Die Betriebsspannung des Relais 8 kann durch eine einfache Batterie 9, z. B. mit einer Spannung von 1,5 oder 3 Volt betrieben werden. Auch bei diesem Ausführungsbeispiel sind die Steuerstromkreise für das Gerät und für die Netzfreischaltung voneinander völlig getrennt.

Der in Figur 3 als Prinzipskizze im Schnitt dargestellte Doppelschaltkontakt besteht aus einem Schaltkontakt 5 für die Netzfreischaltung und einem Schaltkontakt 4 für die Funktions-Stelleinrichtung, wie den Stellmotor im Ausführungsbeispiel nach Figuren 2A bis 2C. Isolatoren 15A und 15B trennen die Zuleitungen 5A bzw. 4A zu den Schaltkontakten 5 und 4, deren beiden Pole als Federblechstreifen ausgebildet sein können. Beide Schaltkontakte sind durch einen Schaltwegübertrager 14 gemeinsam mittels eines Tasters 10A schließbar. Je nach Ausgestaltung des hammerkopfförmig gestalteten Schaltwegübertragers 14, der an einem federnden Arm 14A befestigt ist, erfolgt die Kontaktierung gleichzeitig oder, wie dargestellt, nacheinander. In dem Ausführungsbeispiel führt ein Niederdrücken des Tasters 10A zu einem Schließen des Schaltkontakts 5 zwecks Netzfreischaltung und nachfolgend mittels des Schaltwegübertragers 14 ein Schließen des Schaltkontakts 4 für die Stellfunktion. Ein derartiger Doppelkontaktschalter baut außerordentlich klein und kann für jede Stellfunktion des Gerätes verwendet werden.

### Bezugszeichenliste

- 1: Gerät
- 2: Netztransformator
- 3: Schaltereinheit
- 4: Schaltkontakt
- 4': Schaltkontakt
- 4A: elektrische Leitungen
- 5: Schaltkontakt
- 5': Schaltkontakt
- 5A: elektrische Leitungen
- 6: Schalter
- 6': Schalter
- 7: Niederspannungsrelais
- 7': Niederspannungsrelais
- 8: Relais
- 8A: Relaisschalter
- 9: Batterie
- 10: Gehäuse
- 10A: Taster
- 10A': Taster
- 10B: Taster
- 11: Kontrollleuchte
- 12: Schaltfläche
- 13: Verbindungskabel
- 14: Schaltwegübertrager
- 14': Schaltwegübertrager
- 14A: Arm
- 15: Isolator
- 15A: Isolator
- 15B: Isolator

## Patentansprüche

1. Steuerungsanordnung für mit elektrischer Spannung, insbesondere Niederspannung, betriebene, mehrere Funktions-Stelleinrichtungen aufweisende Geräte (1) die über einen mit einer Netzfreischaltungseinrichtung versehenen netzabhängigen Transformator (2) gespeist werden, bestehend aus
a) einer in einer Schaltfläche (12) zur Handbedienung zusammengefaßten Schaltereinheit (3) zur Steuerung der Funktions-Stelleinrichtungen sowie der Netzfreischaltungseinrichtung des zu steuernden Gerätes (1),
b) mehreren über die Schaltfläche (12) von einer Bedienperson mechanisch, insbesondere als Taster, betätigbaren elektrischen Schaltkontakten und
c) Übertragungsmitteln zum Übertragen der Steuerungsbefehle auf die Netzfreischaltungseinrichtung und auf die Funktions-Stelleinrichtungen
**dadurch gekennzeichnet,**
**daß** in der Schaltereinheit (3) für die Netzfreischaltungseinrichtung einerseits und für die Funktions-Stelleinrichtungen andererseits jeweils getrennte Schaltkontakte (4, 4') und (5, 5') und getrennte Übertragungsmittel (4A) und (5A) bei permanenter Trennung der Steuerstromkreise der Netzfreischaltungseinrichtung und Funktions-Stelleinrichtung voneinander vorgesehen sind.

2. Steuerungsanordnung nach Anspruch 1, **dadurch gekennzeichnet, daß** die getrennten Schaltkontakte (4, 5; 4', 5') zur Betätigung durch einen einzigen Fingerdruck zu einem Doppelschaltkontakt zusammengefaßt sind.

3. Steuerungsanordnung nach Anspruch 2, **dadurch gekennzeichnet, daß** die zusammengefaßten Schaltkontakte zeitlich nacheinander schließbar sind.

4. Steuerungsanordnung nach Anspruch 2 oder 3, **gekennzeichnet durch** einen Schaltwegübertrager (14, 14').

5. Steuerungsanordnung nach Anspruch 4, **dadurch gekennzeichnet, daß** der Schaltwegübertrager zwischen je einem Kontakt des Steuerstromkreises des einen und des Steuerstromkreises des anderen Schaltkontaktes (4, 5; 4', 5') angeordnet ist und ein Taster (10A) auf einen Kontakt lediglich des einen Schaltkontaktes (5) einwirkt.

6. Steuerungsanordnung nach einem der Ansprüche 1 bis 5, **dadurch gekennzeichnet, daß** die Steuerstromkreise der Funktions-Stelleinrichtungen über Relaisschalter (7, 7') schließ- und öffnenbar sind und die Steuerspannung des Schaltrelais gemeinsam mit dem Schaltkontakt der Netzfreischaltungseinrichtung schaltbar ist.

7. Steuerungsanordnung nach einem der Ansprüche 1 bis 6, **dadurch gekennzeichnet, daß** die Netzfreischaltungseinrichtung einen die Netzspannung des Netztrafos (2) freischaltenden Relaisschalter (8A) aufweist.

8. Steuerungsanordnung nach Anspruch 7, **dadurch gekennzeichnet, daß** der Steuerstromkreis der Netzfreischaltungseinrichtung eine Hilfsstromquelle (9), wie eine Batterie oder einen Kondensator aufweist, wobei die Batterie bei jedem Einschalten des Netztransformators ggf. wieder aufladbar ist.

9. Steuerungsanordnung nach einem der Ansprüche 1-8, **dadurch gekennzeichnet, daß** die Handbedienung anstatt über eine Kabelverbindung über eine kabellose Befehlsstrecke mit dem zu steuernden Gerät befehlsmäßig gekoppelt ist.

10. Steuerungsanordnungen nach einem der Ansprüche 1-9, **dadurch gekennzeichnet, daß** die Handbedienung einer Basisstation zur kabellosen Fembedienung des zu steuernden Gerätes entnehmbar ist.

11. Steuerungsanordnung nach Anspruch 10, **dadurch gekennzeichnet, daß** die Netzfreischaltung an der Basisstation derart vorgesehen ist, daß die Entnahme der Handbedienung der Basisstation das Netz automatisch freischaltet und beim Zurückstellen der Handbedienung in die Basisstation automatisch wieder ausgeschaltet wird.
